# EUROPÄISCHE PATENTSCHRIFT

(11) **EP 1 123 857 B1**
(45) Veröffentlichungstag und Bekanntmachung des Hinweises auf die Patenterteilung: **14.06.2006**
(21) Anmeldenummer: 01102980.8
(22) Anmeldetag: 08.02.2001
(51) Int. Cl.: B62D 43/02

(54) **Ersatzradhalteeinrichtung**
Spare wheel holding device
Fixation de roue de secours

(30) Priorität: 10.02.2000 DE 10005767
(43) Veröffentlichungstag der Anmeldung: 16.08.2001
(73) Patentinhaber: ORIS FAHRZEUGTEILE HANS RIEHLE GmbH, 71696 Möglingen (DE)
(72) Erfinder: Dunsch, Jürgen, 71229 Leonberg (DE); Riehle, Jörg, 70439 Stuttgart (DE); Riehle, Hans, 71638 Ludwigsburg (DE)
(74) Vertreter: Hoeger, Stellrecht & Partner Patentanwälte

(56) Entgegenhaltungen:
- GB-A- 194 053
- US-A- 3 753 520

## Beschreibung

Die Erfindung betrifft eine Ersatzradhalteeinrichtung für eine ein Steilheck mit Hecktüre aufweisende Fahrzeugkarosserie, umfassend einen ein Ersatzrad haltenden Ersatzradträger, der über ein Schwenkgelenk mit der Fahrzeugkarosserie schwenkbar verbunden ist, dessen Schwenkachse so angeordnet ist, daß der Ersatzradträger das Ersatzrad von einer Fahrtstellung, in welcher es hinter der Hecktüre steht, in eine Heckzugangsstellung bringbar ist, in welcher das vom Ersatzradträger gehaltene Ersatzrad zumindest mit einem Teilbereich einen hinteren Teil einer Längsseite der Fahrzeugkarosserie übergreifend angeordnet ist, d. h. sich das Ersatzrad mit dem Teilbereich vom Heck der Fahrzeugkarosserie aus nach vorne erstreckt und dabei mit diesem Teilbereich die Längsseite übergreift.

Derartige Ersatzradträger sind beispielsweise aus der US 3,753,520 bekannt, wobei diese mit zwei Schwenkgelenken an der Fahrzeugkarosserie, beispielsweise nahe den Beschlägen für die Hecktür, gehalten sind.

Mit einer derartigen Ersatzradhalteeinrichtung ist das Öffnen der Hecktür zum Beladen problematisch.

Außerdem erfordert eine derartige Ersatzradhalteeinrichtung auch speziell an der Fahrzeugkarosserie vorgesehene Aufnahmen für die Schwenklager.

Der Erfindung liegt daher die Aufgabe zugrunde, eine Ersatzradhalteeinrichtung der gattungsgemäßen Art derart zu verbessern, daß ein heckseitiger Zugang zur Fahrzeugkarosserie und somit zur Hecktür günstiger ist und daß diese möglichst einfach an der Fahrzeugkarosserie fixierbar ist.

Diese Aufgabe wird bei einer Ersatzradhalteeinrichtung der eingangs beschriebenen Art erfindungsgemäß dadurch gelöst, daß das Schwenklager eine Schwenkachse aufweist, welche quer zur vertikalen Fahrzeuglängsmittelebene verläuft und daß die Schwenkachse so ausgerichtet ist, daß sie mit einer Vertikalen einen spitzen Winkel einschließt, so daß sich beim Verschwenken der Abstand des Ersatzrades von der Fahrbahnoberfläche ändert.

Der Vorteil der erfindungsgemäßen Lösung ist darin zu sehen, daß damit - obwohl nur ein Schwenken um eine Schwenkachse erforderlich ist - der Heckzugang zur Fahrzeugkarosserie verbessert ist, da das Ersatzrad in der Heckzugangsstellung aufgrund der Tatsache, daß es zumindest mit einem Teilbereich einen hinteren Teil der Längsseite der Fahrzeugkarosserie übergreift, weniger weit über das Heck der Fahrzeugkarosserie nach hinten übersteht, als die aus dem Stand der Technik bekannten Lösungen.

Vorzugsweise steht dabei das Ersatzrad ungefähr parallel zur Längsseite der Fahrzeugkarosserie.

Alternativ oder ergänzend zu den vorstehend genannten Lösungen wird die erfindungsgemäße Aufgabe aber auch dadurch gelöst, daß der Ersatzradträger mit einem einzigen Schwenklager gegenüber der Fahrzeugkarosserie schwenkbar gehalten ist.

Das Vorsehen eines einzigen Schwenklagers erlaubt es, die Montage des Ersatzradträgers an der Fahrzeugkarosserie erheblich zu vereinfachen.

Prinzipiell kann das Schwenklager so ausgebildet sein, daß es ein Schwenken um mehrere Achsen zuläßt oder auch eventuell zusätzlich zum Schwenken noch eine translatorische Bewegung vorsieht.

Besonders günstig ist es dabei, wenn der Ersatzradträger in dem Schwenklager nur um eine einzige Schwenkachse schwenkbar gelagert ist, so daß damit für den Ersatzradträger eine definierte Schwenkbewegung um die Schwenkachse vorgegeben ist und somit ein einfaches Verschwenken von der Fahrtstellung in die Heckzugangsstellung möglich ist.

Alternativ oder ergänzend zu den vorstehend beschriebenen Lösungen wird die erfindungsgemäße Aufgabe aber auch dadurch gelöst, daß das Schwenklager unterhalb der Oberkante einer Stoßfängereinheit angeordnet ist.

Eine derartige Anordnung des Schwenklagers unterhalb einer Oberkante der Stoßfängereinheit, d. h. zwischen der Oberkante der Stoßfängereinheit und der Fahrbahnoberfläche, hat den großen Vorteil, daß damit eine weit einfachere und stabilere Anordnung des Schwenklagers realisierbar ist, als dies beim Stand der Technik der Fall ist, bei welchem das Schwenklager stets oberhalb der Oberkante der Stoßfängereinheit angeordnet ist.

Insbesondere führt die Anordnung des Schwenklagers unterhalb einer Oberkante der Stoßfängereinheit auch dazu, daß damit das Öffnen der Hecktür völlig unbeeinflußt vom Schwenklager erfolgen kann und außerdem die Fahrzeugkarosserie oberhalb der Oberkante der Stoßfängereinheit keinerlei zusätzliche Stabilisierungselemente aufweisen muß, die in der Lage sind, das Schwenklager für den Ersatzradträger zu halten.

Eine Realisierungsform der Anordnung des Schwenklagers sieht beispielsweise vor, daß das Schwenklager in die Stoßfängereinheit integriert ist.

Alternativ dazu ist es aber auch denkbar, daß das Schwenklager unterhalb einer Unterkante der Stoßfängereinheit sitzt. Diese Anordnung hat den großen Vorteil, daß damit die Stoßfängereinheit völlig unbehelligt von dem Schwenklager ausgebildet sein kann und somit eine Änderung der Stoßfängereinheit selbst bei Anbau der erfindungsgemäßen Ersatzradhalteeinrichtung nicht erforderlich ist.

Alternativ oder ergänzend zu den vorstehend genannten Ausführungsbeispielen sieht eine besonders günstige Lösung vor, daß das Schwenklager über eine für die Stoßfängereinheit vorgesehene Halteeinrichtungen mit der Fahrzeugkarosserie verbunden ist. Diese Lösung hat den Vorteil, daß aufgrund der Tatsache, daß die Stoßfängereinheit üblicherweise ohnehin abnehmbar ist, eine einfache Montage des Schwenklagers über die für den Stoßfänger an der Fahrzeugkarosserie vorgesehene Montagestellen erfolgen kann.

Eine besonders günstige Lösung sieht dabei vor, daß das Schwenklager mit einem Stoßfängerhalter der Fahrzeugkarosserie verbunden ist.

Da üblicherweise die Stoßfängerhalter der Fahrzeugkarosserie nicht derart stabil ausgebildet sind, daß über diese große Biegemomente übertragen werden können, ist vorzugsweise vorgesehen, daß beide Stoßfängerhalter durch eine Verstrebung miteinander verbunden sind und daß das Schwenklager durch die Verstrebung und die beiden Stoßfängerhalter relativ zur Fahrzeugkarosserie stabilisiert ist.

Hinsichtlich der Bewegung des Ersatzrades relativ zur Fahrbahnoberfläche beim Übergang von der Fahrtstellung in die Heckzugangsstellung wurden im Zusammenhang mit der bisherigen Erläuterung der einzelnen Ausführungsbeispiele keine näheren Angaben gemacht.

So wäre es beispielsweise möglich, die Bewegung so zu gestalten, daß sich das Ersatzrad im wesentlichen in gleichem Abstand über der Fahrbahnoberfläche bewegt.

Eine besonders günstige Lösung sieht jedoch vor, daß das Schwenklager so ausgebildet ist, daß das Ersatzrad in der Heckzugangsstellung in größerem Abstand von der Fahrbahnoberfläche angeordnet ist als in der Fahrtstellung.

Dabei könnte das Schwenklager beispielsweise so ausgebildet sein, daß der Abstand des Ersatzrades von der Fahrbahnoberfläche beim Übergang von der Fahrtstellung in die Heckzugangsstellung zunächst sich vergrößert, dann einen Maximalwert durchläuft und schließlich in der Heckzugangsstellung einen Wert aufweist, welcher geringer als der Maximalwert ist, so daß damit eine Totpunktlage für das Ersatzrad in der Heckzugangsstellung erhältlich ist, die automatisch ein Aufrechterhalten der Heckzugangsstellung gewährleistet.

Alternativ dazu ist es aber auch denkbar, wenn das Ersatzrad auf seinem Weg von der Fahrtstellung zur Heckzugangsstellung gegenüber der Fahrbahnoberfläche ständig angehoben wird.

Vorzugsweise ist eine Fixiereinrichtung vorzusehen, mit welcher das Ersatzrad und der Ersatzradträger in der Heckzugangsstellung fixierbar sind.

Alternativ oder ergänzend sieht eine weitere erfindungsgemäß bevorzugte Bewegungsform des Ersatzradhalters vor, daß dieser in der Heckzugangsstellung einen Abstand von der Längsseite der Fahrzeugkarosserie aufweist, welcher maximal ungefähr dem Abstand des Ersatzradhalters vom Heck der Fahrzeugkarosserie in der Fahrtstellung entspricht.

Hinsichtlich der Ausbildung des Schwenklagers in einem derartigen Fall, in welchem sich der Abstand des Ersatzrades von der Fahrbahnoberfläche ändert, wurden bislang keine näheren Angaben gemacht. So sieht eine besonders günstige Lösung vor, daß das Schwenklager eine Schwenkachse aufweist, welche quer zur vertikalen Fahrzeuglängsmittelebene verläuft.

Vorzugsweise ist dabei die Schwenkachse so ausgerichtet, daß sie mit einer Vertikalen einen spitzen Winkel einschließt.

Ferner ist vorzugsweise vorgesehen, daß die Schwenkachse mit einer senkrecht zur vertikalen Fahrzeuglängsmittelebene verlaufenden Horizontalen einen spitzen Winkel einschließt.

Ferner ist es günstig, wenn die Schwenkachse mit einer parallel zur vertikalen Fahrzeuglängsmittelebene verlaufenden Horizontalen einen spitzen Winkel einschließt.

Hinsichtlich der Ausbildung des Ersatzradträgers wurden im einzelnen noch keine näheren Angaben gemacht. So sieht eine vorteilhafte Lösung vor, daß der Ersatzradträger auf einer Seite einen zum Schwenklager führenden Lagerarm aufweist.

Damit ist der Ersatzradträger in einfacher Weise so ausbildbar, daß das Ersatzrad in der Fahrtstellung vorzugsweise mittig zur Fahrzeugkarosserie angeordnet ist.

Es ist aber auch denkbar, den Ersatzradträger außermittig zur Fahrzeugkarosserie in der Fahrtstellung anzuordnen.

Eine besonders günstige Fixierung des Ersatzradträgers in der Fahrtstellung ist dann möglich, wenn der Ersatzradträger auf einer dem Lagerarm gegenüberliegenden Seite einen Fixierarm zur Fixierung an der Fahrzeugkarosserie in der Fahrtstellung aufweist.

Damit läßt sich der Ersatzradträger in vorteilhafterweise auf jeweils im wesentlichen gegenüberliegenden Seiten in der Fahrtstellung relativ zur Fahrzeugkarosserie stabil fixieren.

Hinsichtlich des Verlaufs des Fixierarms wurden bislang ebenfalls keine näheren Angaben gemacht. So ist es insbesondere, wenn sich der Abstand des Ersatzrades von der Fahrbahnoberfläche beim Übergang von der Fahrtstellung in die Heckzugangsstellung ändert, vorzugsweise auch vorgesehen, daß in der Heckzugangsstellung der Fixierarm von der Fahrbahnoberfläche einen größeren Abstand aufweist als in der Fahrtstellung.

Hinsichtlich der Fixierung des Ersatzradträgers in der Fahrtstellung wurden bislang keine spezifischen Angaben gemacht. So sieht eine besonders vorteilhafte Lösung vor, daß eine Fixiereinrichtung unterhalb einer Oberkante der Stoßfängereinheit angeordnet ist. Eine derartige Anordnung der Fixiereinrichtung hat ebenfalls den Vorteil, daß an der Fahrzeugkarosserie oberhalb der Stoßfängereinheit ohne spezielle Verstärkungen für die Fixiereinrichtung ausgebildet sein kann.

Besonders günstig ist es dabei, wenn die Fixiereinrichtung im Bereich der Stoßfängereinheit angeordnet ist oder unterhalb einer Unterkante der Stoßfängereinheit angeordnet ist.

Vorzugsweise umfaßt dabei die Fixiereinrichtung eine an der Fahrzeugkarosserie fest angeordnete Fixieraufnahme und ein am Ersatzradträger gehaltenes, vorzugsweise am Fixierarm desselben gehaltenes Fixierelement.

Hinsichtlich der Verbindung zwischen der Fixieraufnahme mit der Fahrzeugkarosserie ist es besonders günstig, wenn die Fixieraufnahme über eine für die Stoßfängereinheit vorgesehene Halteeinrichtung mit der Fahrzeugkarosserie verbunden ist, so daß sich ebenfalls in einfacher Weise auch die Fixieraufnahme nachträglich an der Fahrzeugkarosserie montieren läßt.

Eine besonders günstige Lösung sieht dabei vor, daß die Fixieraufnahme mit einem Stoßfängerhalter verbunden ist.

Noch vorteilhafter ist es, wenn die Fixieraufnahme mit beiden Stoßfängerhaltern über eine Verstrebung verbunden ist.

Weitere Merkmale und Vorteil der Erfindung sind Gegenstand der nachfolgenden Beschreibung sowie der zeichnerischen Darstellung einiger Ausführungsbeispiele. In der Zeichnung zeigen:
- Fig. 1: eine schematische ausschnittsweise Darstellung eines ersten Ausführungsbeispiels einer erfindungsgemäßen Ersatzradhalteeinrichtung in Verbindung mit einer teilweise dargestellten Fahrzeugkarosserie, wobei der Ersatzradträger und das Ersatzrad in der Fahrtstellung stehen;
- Fig. 2: eine Darstellung ähnlich Fig. 1, wobei der Ersatzradträger und das Ersatzrad aus der Fahrtstellung herausgeschwenkt sind;
- Fig. 3: eine Darstellung ähnlich Fig. 1 von einer gegenüberliegenden Seite der Fahrzeugkarosserie, wobei das Ersatzrad und der Ersatzradträger in einer Heckzugangsstellung stehen;
- Fig. 4: eine Darstellung des Ersatzrades und des Ersatzradträgers in der Heckzugangsstellung aus derselben Perspektive wie in Fig. 1;
- Fig. 5: eine ausschnittsweise Darstellung einer Anordnung eines Schwenklagers und einer Fixieraufnahme an einer Stoßfängereinheit beim ersten Ausführungsbeispiel; und
- Fig. 6: eine perspektivische Darstellung eines zweiten Ausführungsbeispiels einer Ersatzradhalteeinrichtung mit gleichzeitiger Darstellung der Fahrtstellung, einer Zwischenstellung und der Heckzugangsstellung mit Blickrichtung von hinten oben auf eine schematisch dargestellte Fahrzeugkarosserie.

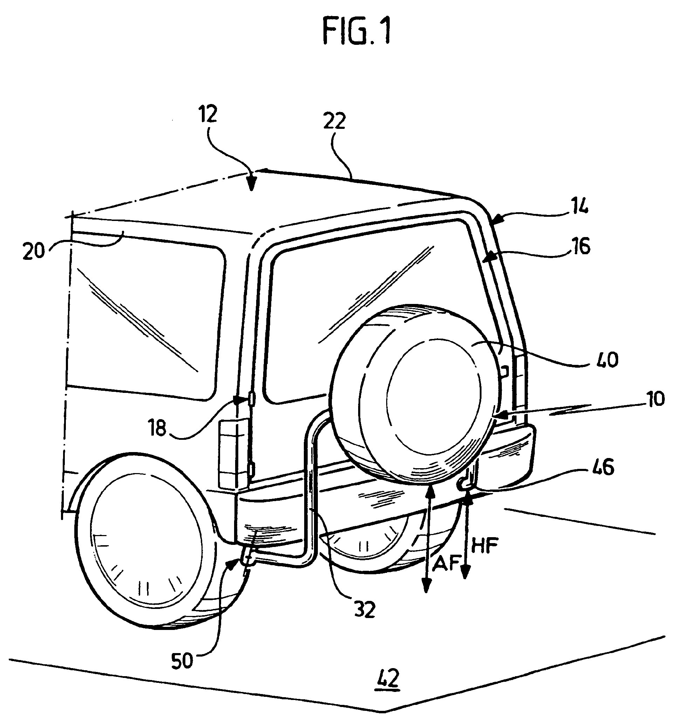

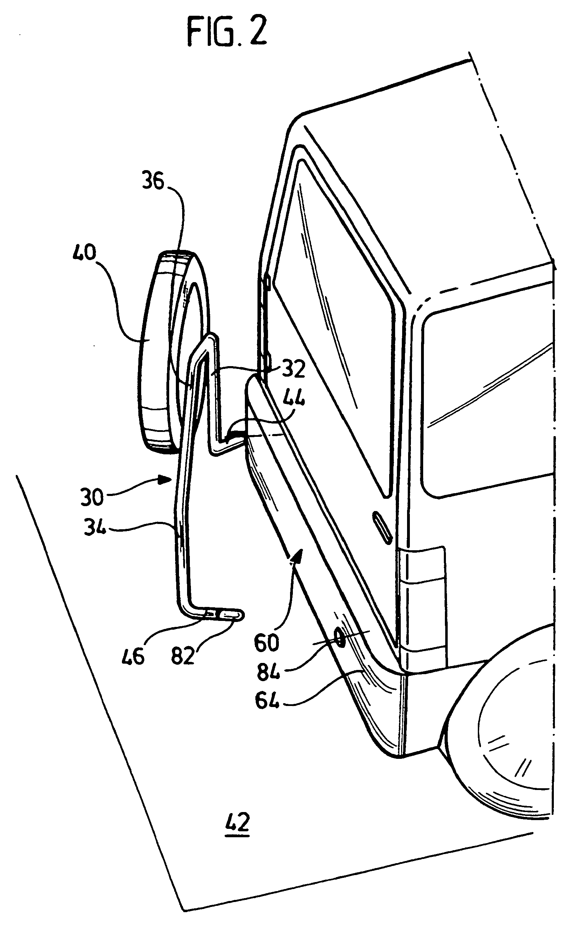

Ein erstes Ausführungsbeispiel einer erfindungsgemäßen Ersatzradhalteeinrichtung ist in Fig. 1 bis 5 dargestellt und als Ganzes mit 10 bezeichnet.

Die Ersatzradhalteeinrichtung 10 ist an einer als Ganzes mit 12 bezeichneten Fahrzeugkarosserie im Bereich eines Hecks 14 montiert, wobei das Heck 14 als Steilheck ausgebildet ist und mit einer Hecktür 16 versehen ist, welche beispielsweise mittels Scharnieren 18 zu einer Seite der Karosserie hin, beispielsweise in Richtung einer Längsseite 20 von zwei gegenüberliegenden Längsseiten 20 und 22, verschwenkbar ist. Die Hecktür 16 kann aber auch nach oben schwenkbar sein.

Die erfindungsgemäße Ersatzradhalteeinrichtung 10 umfaßt einen Ersatzradträger 30, welcher aus umgekehrt U-förmigen Bügeln mit zwei Seitenschenkeln 32 und 34 und einem Mittelschenkel 36 gebildet ist, wobei vorzugsweise am Mittelschenkel 36 ein Ersatzrad 40 gehalten ist, während sich die Seitenschenkel 32 und 34 in Richtung einer Fahrbahnoberfläche 42 erstrecken.

An einem der Seitenschenkel 32, 34, beispielsweise am Seitenschenkel 32, ist ein als Ganzes mit 44 bezeichneter Lagerarm gehalten, während am anderen Seitenschenkel 34 ein als Ganzes mit 46 bezeichneter Fixierarm gehalten ist.

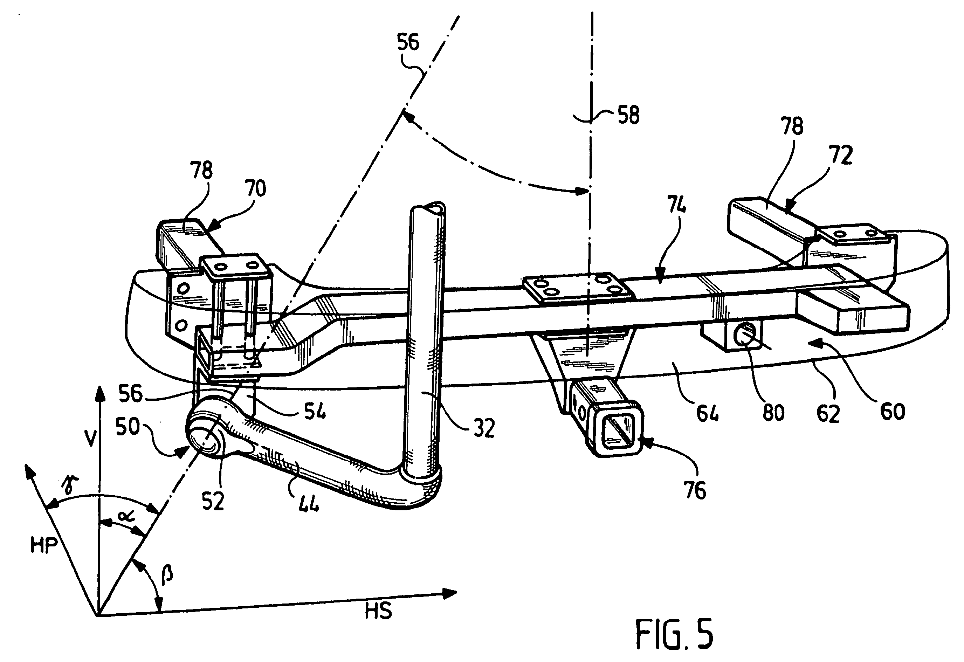

Der Lagerarm 44 erstreckt sich dabei zu einem als Ganzes mit 50 bezeichneten Schwenklager, welches, wie in Fig. 5 dargestellt, einen Schwenkkörper 52 aufweist, der gegen einen fest mit der Fahrzeugkarosserie 12 verbundenen Lagerkörper 54 um eine einzige Schwenkachse 56 schwenkbar gelagert ist.

Diese Schwenkachse 56 verläuft quer zu einer vertikalen Fahrzeuglängsmittelebene 58, wobei die Schwenkachse 56 mit einer Vertikalen V einen Winkel α, mit einer senkrecht auf der vertikalen Längsmittelebene 58 stehenden Horizontalen HS einen Winkel β und mit einer parallel zur vertikalen Längsmittelebene 58 verlaufenden Horizontalen HP einen Winkel γ einschließt, wobei alle Winkel α, β und γ spitze Winkel sind.

Vorzugsweise verläuft dabei die Schwenkachse 56 so, daß sie mit zunehmender Erstreckung in Richtung der Fahrbahnoberfläche 42 einen zunehmenden Abstand von der vertikalen Längsmittelebene 58 aufweist.

Das Schwenklager 50 ist vorzugsweise so angeordnet, daß es unterhalb einer heckseitigen Stoßfängereinheit 60, vorzugsweise unterhalb einer Unterkante 62 der Stoßfängereinheit 60 liegt, wobei sich der Lagerarm 44 unterhalb der Unterkante 62 der Stoßfängereinheit 60 bis zum Seitenschenkel 32 erstreckt, wenn der Ersatzradträger 30 in der in Fig. 1 dargestellten Fahrtstellung steht, in welcher das Ersatzrad 40 ungefähr parallel zum Heck 14 und somit ungefähr parallel zur geschlossenen Hecktür 16 ausgerichtet ist.

Vorzugsweise ist dabei der Lagerkörper 54 des Schwenklagers 50 an einem von zwei Stoßfängerhaltern 70 und 72 fixiert, welche in der Fahrzeugkarosserie 12 heckseitig verankert sind.

Ferner sind die beiden Stoßfängerhalter miteinander vorzugsweise durch eine Verstrebung 74 verbunden, welche beispielsweise durch einen Außenkörper 64 überdeckt ist.

Die Verstrebung 74 versteift dabei die beiden Stoßfängerhalter 70 und 72 miteinander, so daß sämtliche von dem Lagerkörper 54 auf den Stoßfängerhalter 70 wirkenden Kräfte auch auf den Stoßfängerhalter 72 übertragen werden und somit letztlich der Lagerkörper 54 durch beide Stoßfängerhalter 70 und 72 aufgrund der Verstrebung 74 wirkt und somit stabil an der Fahrzeugkarosserie 12 verankert ist.

Vorzugsweise kann die Verstrebung 74 auch noch mit einer Aufnahme 76 versehen sein, welche als Aufnahme für weitere Anbauten, wie beispielsweise zusätzliche Hecklastenträger, Skiträger oder auch eine Anhängekupplung dient.

Die Aufnahme 76 liegt dabei vorzugsweise ebenfalls unterhalb einer Unterkante der Stoßfängereinheit 60, d. h. auf einer der Fahrbahnoberfläche 42 zugewandten Seite der Stoßfängereinheit 60.

Es ist aber auch denkbar, die Verstrebung 74 lediglich so auszubilden, daß sie die beiden Stoßfängerhalter 70 und 72 insoweit versteift, als diese in der Lage sein müssen, gemeinsam den Lagerkörper 54 relativ zur Fahrzeugkarosserie 12 stabil zu halten.

Lediglich im Fall, daß die Verstrebung 74 noch mit zusätzlichen Kräften belastet wird, werden die Stoßfängerhalter 70 und 72 als verstärkte, beispielsweise für die Kräfte einer Anhängekupplung geeignete Stoßfängerhalter 70 und 72 ausgebildet, welche sich jeweils mit einem Arm 78 in eine entsprechende Ausnehmung der Fahrzeugkarosserie 12 hineinerstrecken und in dieser verankert sind.

Ferner ist vorzugsweise an der Verstrebung 74 noch eine fahrzeugfest angeordnete Fixieraufnahme 80 vorgesehen, in welche ein Fixierelement 82, welches am Fixierarm 46 gehalten ist, einführbar und durch einen üblichen Verriegelungsmechanismus fixierbar ist, wenn der Ersatzradträger 30 in der Fahrtstellung steht, so daß in diesem Fall der Ersatzradträger 30 einerseits über den Lagerarm 44 fest durch das Schwenklager 50 gehalten ist und andererseits über den Fixierarm 46 durch die auf das Fixierelement 82 wirkende Fixieraufnahme 80 gegenüber der Fahrzeugkarosserie 12 in ihrer Fahrtstellung fixiert ist.

Vorzugsweise ist dabei die Fixieraufnahme 80 durch den Außenkörper 64 der Stoßfängereinheit 60 abgedeckt und lediglich über eine Öffnung 84 im Außenkörper 64 der Stoßfängereinheit 60 zugänglich.

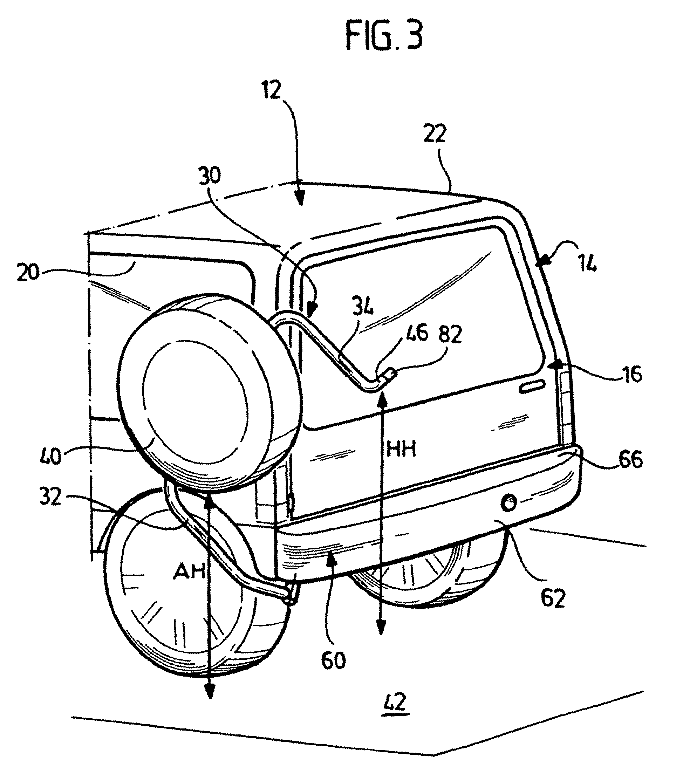

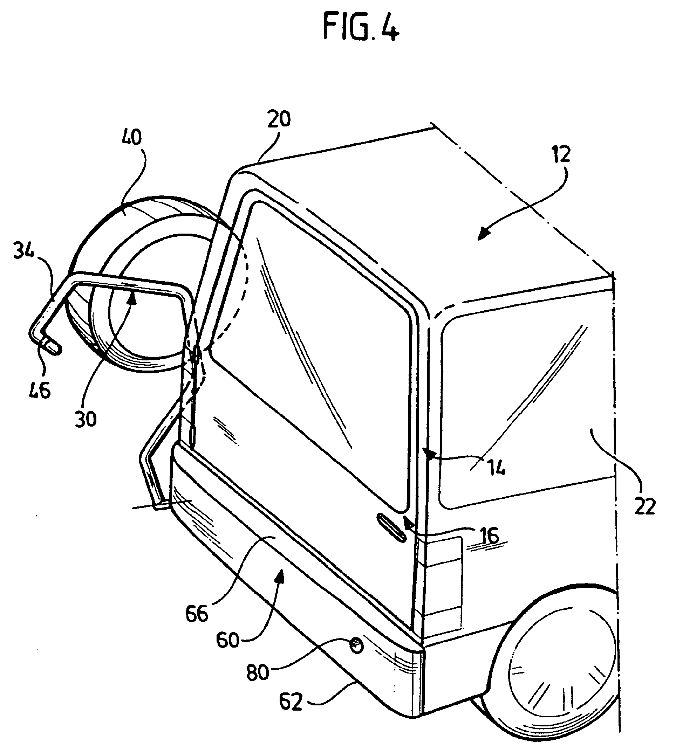

Wie in Fig. 1 bis 4 dargestellt, läßt sich nun ausgehend von der in Fig. 1 dargestellten Fahrtstellung des Ersatzradträgers nach Lösen des Fixierelements 82 in der Fixieraufnahme 80 der Ersatzradträger 30 derart um die Schwenkachse 56 verschwenken, daß sich der Fixierarm 46 von der Stoßfängereinheit 60 zunehmend entfernt, wobei sich der Ersatzradträger 30 von seiner vorzugsweise senkrecht zur vertikalen Längsmittelebene 58 verlaufenden, in Fig. 1 dargestellten Heckzugangsstellung wegbewegt, wobei eine durch die Seitenschenkel 32 und 34 hindurchverlaufende Ebene mit zunehmenden Verschwenken um die Schwenkachse 56 in einem immer spitzer werdenden Winkel zur vertikalen Längsmittelebene 58 verläuft, so lange, bis, wie in Fig. 3 und 4 dargestellt, die durch die Seitenschenkel 34 und 34 aufgespannte Ebene ungefähr parallel zur vertikalen Längsmittelebene 58 verläuft, wobei das Ersatzrad 40 dann so angeordnet ist, daß es, wie insbesondere in Fig. 3 und 4 erkennbar, teilweise die Längsseite 20 der Fahrzeugkarosserie 12 übergreift, welche dem Schwenklager 50 nächstliegend angeordnet ist. Dabei kann das Ersatzrad 40 stehen, daß der Teilbereich, welcher die Längsseite 20 übergreift, nur einen Bruchteil des Ersatzrades 40 darstellt, welcher in Fig. 4 gestrichelt dargestellt ist.

Es ist aber auch denkbar, das Schwenklager 50 so auszubilden, daß der Teilbereich, welcher die Längsseite 20 übergreift, mehr als ein Drittel, noch besser mehr als die Hälfte des Ersatzrades 40, noch besser mehr als zwei Drittel des Ersatzrades 40 beträgt, so daß der über das Heck 14 nach hinten überstehende Teilbereich des Ersatzrades 40 gering ist.

Vorzugsweise steht das Ersatzrad 40 mit dem Ersatzradträger 30 in der Heckzugangsstellung auf der Fahrerseite der Fahrzeugkarosserie 12, d. h. im Fall von Rechtsverkehr auf der linken Seite.

Vorzugsweise ist die Schwenkachse 56 im Raum und gegenüber der vertikalen Längsmittelebene 58 derart geneigt ausgebildet, daß in der Fahrtstellung ein Abstand AF des Ersatzrades 40 von der Fahrbahnoberfläche 42 kleiner ist als ein Abstand AH des Ersatzrades 40 in der in Fig. 3 und 4 dargestellten Heckzugangsstellung des Ersatzradträgers 30, d. h., daß das Ersatzrad 40 beim Übergang von der Fahrtstellung, dargestellt in Fig. 1, in die Heckzugangsstellung, dargestellt in Fig. 3 und 4, aufgrund der Ausrichtung der Schwenkachse 56 angehoben wird.

Gleichzeitig erfolgt auch, wie in Fig. 1 einerseits sowie in Fig. 3 und 4 andererseits dargestellt, beim Übergang des Ersatzradträgers 30 von der in Fig. 1 dargestellten Fahrtstellung in die in Fig. 3 und 4 dargestellte Heckzugangsstellung ein Anheben des Fixierarms 46 gegenüber der Fahrbahnoberfläche 42, so daß der Fixierarm 46 in der Fahrtstellung in einer Höhe HF über der Fahrbahnoberfläche 42 steht, die kleiner ist als die Höhe HH, in welcher der Fixierarm 46 in der Heckzugangsstellung des Ersatzradträgers 30 steht.

In umgekehrter Weise erfolgt dann beim Zurückschwenken von der in Fig. 3 und 4 dargestellten Heckzugangsstellung in die Fahrtstellung ein Absenken des Ersatzrades 40.

Um eine stabile Position des Ersatzradträgers 30 mit dem Ersatzrad 40 in der Heckzugangsstellung zu erhalten, ist einerseits das Schwenklager 50 so ausgebildet, daß dieses in der Heckzugangsstellung nicht mehr weiter um die Schwenkachse 56 verschwenkbar ist und somit einen Anschlag aufweist, welcher das Ersatzrad 40 in stabiler Ausrichtung relativ zur Fahrzeugkarosserie 12 hält und vorzugsweise in einem definierten Abstand von der Längsseite 20 der Fahrzeugkarosserie 12, welcher maximal ungefähr dem Abstand des Ersatzrades 40 vom Heck in der Fahrtstellung entspricht, um Beschädigungen der Fahrzeugkarosserie durch den Ersatzradträger 30 zu vermeiden.

Ferner ist vorzugsweise vorgesehen, daß das Ersatzrad 40 beim Verschwenken von der Fahrtstellung in die Heckzugangsstellung bezüglich seines Abstands A von der Fahrbahnoberfläche 42 ein Maximum durchläuft, jedoch in der Heckzugangsstellung den Abstand AH aufweist, der kleiner ist als der maximale Abstand A des Ersatzrades 40 auf seinem Weg von der Fahrtstellung zur Heckzugangsstellung, so daß dadurch bereits eine stabile Positionierung des Ersatzrades 40 mit dem Ersatzradträger 30 erreicht ist.

Alternativ dazu ist es aber auch denkbar, beispielsweise im Bereich des Schwenklagers 50 eine Fixiereinrichtung vorzusehen, mit welcher der Ersatzradträger 30 gegenüber der Fahrzeugkarosserie 12 in der Heckzugangsstellung fixierbar ist.

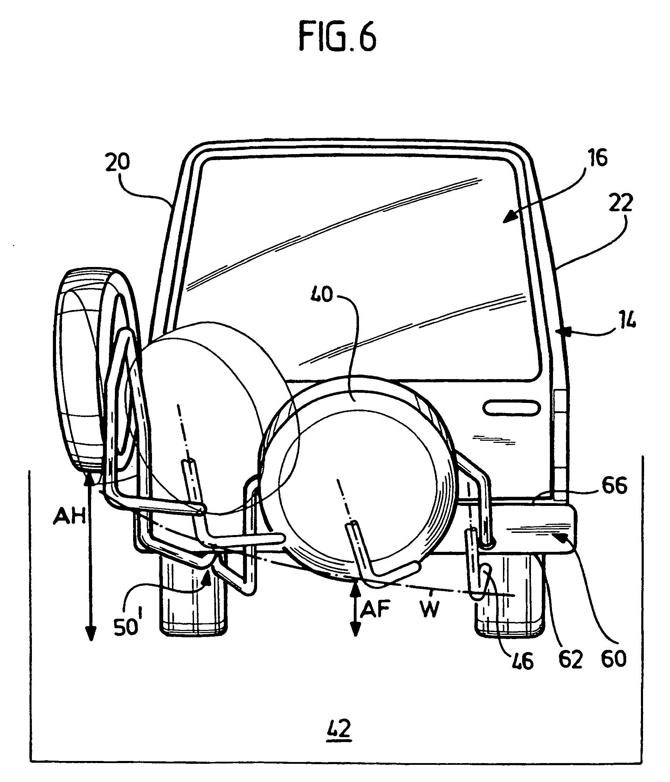

Bei einem zweiten Ausführungsbeispiel der erfindungsgemäßen Ersatzradhalteeinrichtung, dargestellt in Fig. 6, sind diejenigen Elemente, die mit denjenigen des ersten Ausführungsbeispiels identisch sind, mit denselben Bezugszeichen versehen, so daß hinsichtlich der Beschreibung derselben vollinhaltlich auf das erste Ausführungsbeispiel Bezug genommen werden kann.

Im Gegensatz zum ersten Ausführungsbeispiel ist bei dem zweiten Ausführungsbeispiel das Schwenklager 50' nicht sichtbar angeordnet, sondern in die hintere Stoßfängereinheit 60 integriert, so daß das Schwenklager 50 zwar unterhalb einer Oberkante 66 der hinteren Stoßfängereinheit 60 liegt, jedoch nicht unterhalb der Unterkante 62 derselben.

Darüber hinaus ist deutlich erkennbar, daß der Fixierarm 46 und somit auch das Ersatzrad 40 auf dem Weg von der Fahrtstellung in die Heckzugangsstellung sich längs eines Weges W bewegen, welcher ausgehend von der Fahrtstellung zur Heckzugangsstellung kontinuierlich oder stetig ansteigend ausgebildet ist, so daß in der Heckzugangsstellung der Abstand AH von der Fahrbahnoberfläche 42 nennenswert größer ist als in der Fahrtstellung.

## Patentansprüche

1. Ersatzradhalteeinrichtung für eine ein Steilheck mit Hecktüre aufweisende Fahrzeugkarosserie (12), umfassend einen ein Ersatzrad (40) haltenden Ersatzradträger (30), der über ein Schwenkgelenk (50) mit der Fahrzeugkarosserie (12) schwenkbar verbunden ist, dessen Schwenkachse (56) so angeordnet ist, daß der Ersatzradträger (30) das Ersatzrad (40) von einer Fahrtstellung, in welcher es hinter der Hecktüre (16) steht, in eine Heckzugangsstellung bringbar ist, in welcher das vom Ersatzradträger (30) gehaltene Ersatzrad (40) zumindest mit einem Teilbereich einen hinteren Teil einer Längsseite (20) der Fahrzeugkarosserie (12) übergreifend angeordnet ist,
**dadurch gekennzeichnet, daß** das Schwenklager (50) eine Schwenkachse (56) aufweist, welche quer zur vertikalen Fahrzeuglängsmittelebene (58) verläuft und daß die Schwenkachse (56) so ausgerichtet ist, daß sie mit einer Vertikalen (V) einen spitzen Winkel (α) einschließt.

2. Ersatzradhalteeinrichtung nach Anspruch 1, **dadurch gekennzeichnet, daß** in der Heckzugangsstellung das Ersatzrad (40) ungefähr parallel zur Längsseite (20) der Fahrzeugkarosserie (12) ausgerichtet ist.

3. Ersatzradhalteeinrichtung nach einem der voranstehenden Ansprüche, **dadurch gekennzeichnet, daß** der Ersatzradträger (30) mit einem einzigen Schwenklager (50) gegenüber der Fahrzeugkarosserie (12) schwenkbar gehalten ist.

4. Ersatzradhalteeinrichtung nach Anspruch 3, **dadurch gekennzeichnet, daß** der Ersatzradträger (30) in dem Schwenklager (50) nur um eine einzige Schwenkachse (56) schwenkbar gelagert ist.

5. Ersatzradhalteeinrichtung nach einem der voranstehenden Ansprüche, **dadurch gekennzeichnet, daß** das Schwenklager (50) unterhalb einer Oberkante (66) einer Stoßfängereinheit (60) angeordnet ist.

6. Ersatzradhalteeinrichtung nach Anspruch 5, **dadurch gekennzeichnet, daß** das Schwenklager (50') in die Stoßfängereinheit (60) integriert ist.

7. Ersatzradhalteeinrichtung nach Anspruch 5, **dadurch gekennzeichnet, daß** das Schwenklager unterhalb einer Unterkante (62) der Stoßfängereinheit (60) sitzt.

8. Ersatzradhalteeinrichtung nach einem der voranstehenden Ansprüche, **dadurch gekennzeichnet, daß** das Schwenklager (50) über eine für die Stoßfängereinheit (60) vorgesehene Halteeinrichtung (70, 72) mit der Fahrzeugkarosserie (12) verbunden ist.

9. Ersatzradhalteeinrichtung nach Anspruch 8, **dadurch gekennzeichnet, daß** das Schwenklager (50) mit einem Stoßfängerhalter (70, 72) der Fahrzeugkarosserie (12) verbunden ist.

10. Ersatzradhalteeinrichtung nach Anspruch 9, **dadurch gekennzeichnet, daß** beide Stoßfängerhalter (70, 72) durch eine Verstrebung (74) miteinander verbunden sind und daß das Schwenklager (50) durch die Verstrebung (74) und die beiden Stoßfängerhalter (70, 72) relativ zur Fahrzeugkarosserie (12) stabilisiert ist.

11. Ersatzradhalteeinrichtung nach einem der voranstehenden Ansprüche, **dadurch gekennzeichnet, daß** das Schwenklager (50) so ausgebildet ist, daß das Ersatzrad (40) in der Heckzugangsstellung in größerem Abstand (AH) von der Fahrbahnoberfläche (42) angeordnet ist als in der Fahrtstellung.

12. Ersatzradhalteeinrichtung nach einem der voranstehenden Ansprüche, **dadurch gekennzeichnet, daß** die Schwenkachse (56) mit einer senkrecht zur Fahrzeuglängsmittelebene (58) verlaufenden Horizontalen (HS) einen spitzen Winkel (β) einschließt.

13. Ersatzradhalteeinrichtung nach einem der voranstehenden Ansprüche, **dadurch gekennzeichnet, daß** die Schwenkachse (56) mit einer parallel zur vertikalen Fahrzeuglängsmittelebene (58) verlaufenden Horizontalen (HP) einen spitzen Winkel (γ) einschließt.

14. Ersatzradhalteeinrichtung nach einem der voranstehenden Ansprüche, **dadurch gekennzeichnet, daß** der Ersatzradträger (30) auf einer Seite mit einem zum Schwenklager (50) führenden Lagerarm (44) versehen ist.

15. Ersatzradhalteeinrichtung nach Anspruch 14, **dadurch gekennzeichnet, daß** der Ersatzradträger (30) auf einer dem Lagerarm (44) gegenüberliegenden Seite einen Fixierarm (46) zur Fixierung an der Fahrzeugkarosserie (12) in der Fahrtstellung aufweist.

16. Ersatzradhalteeinrichtung nach einem der voranstehenden Ansprüche, **dadurch gekennzeichnet, daß** eine Fixiereinrichtung (80) unterhalb einer Oberkante (66) der Stoßfängereinheit (60) angeordnet ist.

17. Ersatzradhalteeinrichtung nach Anspruch 16, **dadurch gekennzeichnet, daß** die Fixiereinrichtung (80) im Bereich der Stoßfängereinheit (60) angeordnet ist.

18. Ersatzradhalteeinrichtung nach Anspruch 16 oder 17, **dadurch gekennzeichnet, daß** die Fixiereinrichtung eine an der Fahrzeugkarosserie fest angeordnete Fixieraufnahme (80) und ein am Ersatzradträger (30) gehaltenes Fixierelement (82) aufweist.

19. Ersatzradhalteeinrichtung nach Anspruch 18, **dadurch gekennzeichnet, daß** die Fixieraufnahme (80) über eine für die Stoßfängereinheit (60) vorgesehene Halteeinrichtung (70, 72) mit der Fahrzeugkarosserie (12) verbunden ist.

## Claims

1. Spare wheel holding device for a vehicle body (12) having a hatchback with tailgate, comprising a spare wheel carrier (30), which holds a spare wheel (40) and is potentially connected to the vehicle body (12) by a pivotal joint (50), the pivotal axis (56) of which is disposed in such a way that, by means of the spare wheel carrier (30), the spare wheel (40) is movable from a travel position, in which it is behind the tailgate (16), into a rear access position, in which the spare wheel (40) held by the spare wheel carrier (40) is disposed at least with a part-region overlapping a rear part of a longitudinal side (20) of the vehicle body (12), **characterized in that** the pivotal bearing (50) has a pivotal axis (56), which extends transversely of the vertical longitudinal centre plane (58) of the vehicle and **in that** the pivotal axis (56) is directed so as to include with a vertical (V) an acute angle (α).

2. Spare wheel holding device according to claim 1, **characterized in that** in the rear access position the spare wheel (40) is aligned approximately parallel to the longitudinal side (20) of the vehicle body (12).

3. Spare wheel holding device according to one of the preceding claims, **characterized in that** the spare wheel carrier (30) is mounted by means of a single pivotal bearing (50) so as to be capable of pivotal relative to the vehicle body (12).

4. Spare wheel holding device according to claim 3, **characterized in that** the spare wheel carrier (30) is supported in the pivotal bearing (50) so as to be capable of pivotal only about a single pivotal axis (56).

5. Spare wheel holding device according to one of the preceding claims, **characterized in that** the pivotal bearing (50) is disposed below an upper edge (66) of a bumper unit (60).

6. Spare wheel holding device according to claim 5, **characterized in that** the pivotal bearing (50') is integrated in the bumper unit (60).

7. Spare wheel holding device according to claim 5, **characterized in that** the pivotal bearing is seated below a lower edge (62) of the bumper unit (60).

8. Spare wheel holding device according to one of the preceding claims, **characterized in that** the pivotal bearing (50) is connected to the vehicle body (12) by a holding device (70, 72) provided for the bumper unit (60).

9. Spare wheel holding device according to claim 8, **characterized in that** the pivotal bearing (50) is connected to a bumper bracket (70, 72) of the vehicle body (12).

10. Spare wheel holding device according to claim 9, **characterized in that** both bumper brackets (70, 72) are connected to one another by a strut (74) and that the pivotal bearing (50) is stabilized relative to the vehicle body (12) by means of the strut (74) and the two bumper brackets (70, 72).

11. Spare wheel holding device according to one of the preceding claims, **characterized in that** the pivotal bearing (50) is designed in such a way that the spare wheel (40) in the rear access position is disposed at a greater distance (AH) from the road surface (42) than in the travel position.

12. Spare wheel holding device according to one of the preceding claims, **characterized in that** the pivotal axis (56) includes an acute angle (β) with a horizontal (HS), which extends at right angles to the vehicle longitudinal centre plane (58).

13. Spare wheel holding device according to one of the preceding claims, **characterized in that** the pivotal axis (56) includes an acute angle (γ) with a horizontal (HP), which extends parallel to the vertical vehicle longitudinal centre plane (58).

14. Spare wheel holding device according to one of the preceding claims, **characterized in that** the spare wheel carrier (30) is provided at one side with a bearing arm (44) leading to the pivotal bearing (50).

15. Spare wheel holding device according to claim 14, **characterized in that** the spare wheel carrier (30) at an opposite side to the bearing arm (44) has a fixing arm (46) for fixing to the vehicle body (12) in the travel position.

16. Spare wheel holding device according to one of the preceding claims, **characterized in that** a fixing device (80) is disposed below an upper edge (66) of the bumper unit (60).

17. Spare wheel holding device according to claim 16, **characterized in that** the fixing device (80) is disposed in the region of the bumper unit (60).

18. Spare wheel holding device according to claim 16 or 17, **characterized in that** the fixing device comprises a fixing seating (80), which is disposed in a fixed manner on the vehicle body (12), and a fixing element (82) held on the spare wheel carrier (30).

19. Spare wheel holding device according to claim 18, **characterized in that** the fixing receiver (80) is connected to the vehicle body (12) by a holding device (70, 72) provided for the bumper unit (60).

## Revendications

1. Fixation de roue de secours pour une carrosserie de véhicule (12) présentant un hayon arrière avec une porte arrière, comportant un support de roue de secours (30) maintenant une roue de secours (40), support qui est raccordé de manière pivotante à la carrosserie de véhicule (12) par le biais d'une articulation pivotante (50) dont l'axe de pivotement (56) est disposé de telle sorte que le support de roue de secours (30) puisse amener la roue de secours (40) d'une position de roulement, dans laquelle elle se trouve derrière la porte arrière (16), à une position d'accès à la partie arrière dans laquelle la roue de secours (40) maintenue par le support de roue de secours (30) est disposée de manière à recouvrir, au moins avec une zone partielle, une partie arrière d'un côté longitudinal (20) de la carrosserie de véhicule (12), **caractérisée en ce que** le palier pivotant (50) comporte un axe de pivotement (56), lequel s'étend transversalement au plan médian longitudinal vertical du véhicule (58) et **en ce que** l'axe de pivotement (56) est orienté de telle sorte qu'il comprend un angle aigu (α) avec une ligne verticale (V).

2. Fixation de roue de secours selon la revendication 1, **caractérisée en ce que**, dans la position d'accès à la partie arrière, la roue de secours (40) est orientée à peu près parallèlement au côté longitudinal (20) de la carrosserie de véhicule (12).

3. Fixation de roue de secours selon l'une quelconque des revendications précédentes, **caractérisée en ce que** le support de roue de secours (30) est fixé, de manière à pouvoir pivoter, par rapport à la carrosserie de véhicule (12) au moyen d'un seul palier pivotant (50).

4. Fixation de roue de secours selon la revendication 3, **caractérisée en ce que** le support de roue de secours (30) est logé dans le palier pivotant (50) de manière à pouvoir pivoter uniquement autour d'un seul axe de pivotement (56).

5. Fixation de roue de secours selon l'une quelconque des revendications précédentes, **caractérisée en ce que** le palier pivotant (50) est disposé sous une arête supérieure (66) d'une unité pare-chocs (60).

6. Fixation de roue de secours selon la revendication 5, **caractérisée en ce que** le palier pivotant (50') est intégré dans l'unité pare-chocs (60).

7. Fixation de roue de secours selon la revendication 5, **caractérisée en ce que** le palier pivotant se trouve sous une arête inférieure (62) de l'unité pare-chocs (60).

8. Fixation de roue de secours selon l'une quelconque des revendications précédentes, **caractérisée en ce que** le palier pivotant (50) est raccordé à la carrosserie de véhicule (12) par le biais d'un dispositif de maintien (70, 72) prévu pour l'unité pare-chocs (60).

9. Fixation de roue de secours selon la revendication 8, **caractérisée en ce que** le palier pivotant (50) est raccordé à un support de pare-chocs (70, 72) de la carrosserie de véhicule (12).

10. Fixation de roue de secours selon la revendication 9, **caractérisée en ce que** les deux supports de pare-chocs (70, 72) sont raccordés l'un à l'autre par le biais d'une entretoise (74) et **en ce que** le palier pivotant (50) est stabilisé par rapport à la carrosserie du véhicule (12) par l'entretoise (74) et les deux supports de pare-chocs (70, 72).

11. Fixation de roue de secours selon l'une quelconque des revendications précédentes, **caractérisée en ce que** le palier pivotant (50) est réalisé de telle sorte que la roue de secours (40) soit disposée, dans la position d'accès à l'arrière, à une plus grande distance (AH) de la superficie de la chaussée (42) que dans la position de roulement.

12. Fixation de roue de secours selon l'une quelconque des revendications précédentes, **caractérisée en ce que** l'axe de pivotement (56) comprend, avec une ligne horizontale (HS) s'étendant verticalement au plan médian longitudinal du véhicule (58), un angle aigu (*β*).

13. Fixation de roue de secours selon l'une quelconque des revendications précédentes, **caractérisée en ce que** l'axe de pivotement (56) comprend, avec une ligne horizontale (HP) s'étendant parallèlement au plan médian longitudinal vertical du véhicule (58), un angle aigu (γ).

14. Fixation de roue de secours selon l'une quelconque des revendications précédentes, **caractérisée en ce que** le support de roue de secours (30) est muni, sur un côté, d'un bras de palier (44) conduisant au palier pivotant (50).

15. Fixation de roue de secours selon la revendication 14, **caractérisée en ce que** le support de roue de secours (30) comporte, sur un côté opposé au bras de palier (44), un bras de fixation (46) pour la fixation sur la carrosserie du véhicule (12), dans la position de roulement.

16. Fixation de roue de secours selon l'une quelconque des revendications précédentes, **caractérisée en ce qu'**un dispositif de fixation (80) est disposé en dessous d'une arête supérieure (66) de l'unité pare-chocs (60).

17. Fixation de roue de secours selon la revendication 16, **caractérisée en ce que** le dispositif de fixation (80) est disposé au niveau de l'unité pare-chocs (60).

18. Fixation de roue de secours selon la revendication 16 ou 17, **caractérisée en ce que** le dispositif de fixation comporte un logement de fixation (80), solidement disposé sur la carrosserie du véhicule, et un élément de fixation (82) fixé sur le support de roue de secours (30).

19. Fixation de roue de secours selon la revendication 18, **caractérisée en ce que** le logement de fixation (80) est raccordé à la carrosserie du véhicule (12) par le biais d'un dispositif de maintien (70, 72) prévu pour l'unité pare-chocs (60).
